# FASCICULE DE BREVET EUROPEEN

(11) **EP 2 542 470 B1**
(45) Date de publication et mention de la délivrance du brevet: **17.08.2016**
(21) Numéro de dépôt: 11712605.2
(22) Date de dépôt: 18.02.2011
(51) Int. Cl.: B64C 11/30, B64C 11/32, F02K 3/04, F04D 29/36, F01D 7/00

(54) **DISPOSITIF DE COMMANDE DE L'ORIENTATION DES PALES DE SOUFFLANTE D'UN TURBOPROPULSEUR PAR CONTREPOIDS**
BLATTVERSTELLMECHANISMUS EINES TURBOFANTRIEBWERKS MIT GEGENGEWICHTEN ZUM ERREICHEN DER SEGELSTELLUNG
TURBOFAN BLADE PITCH CONTROL MECHANISM COMPRISING COUNTERWEIGHT FEATHERING DEVICE

(30) Priorité: 01.03.2010 FR 1051458
(43) Date de publication de la demande: 09.01.2013
(73) Titulaire: Snecma, 75015 Paris (FR)
(72) Inventeur: GALLET, François, F-75012 Paris (FR)
(74) Mandataire: Boura, Olivier
(86) Numéro de dépôt international: PCT/FR2011/050348
(87) Numéro de publication internationale: WO 2011/107691

(56) Documents cités:
- GB-A- 2 218 747
- US-A- 2 844 303
- US-A- 3 549 272

## Description

### Arrière-plan de l'invention

La présente invention se rapporte au domaine général des turbopropulseurs comportant au moins un ensemble de pales de soufflante à orientation réglable. Elle concerne plus particulièrement la commande d'orientation des pales de soufflante d'un turbopropulseur d'avion à double hélice.

De façon connue, un turbopropulseur d'avion à double hélice comprend une turbine à deux rotors contrarotatifs entraînant chacun un ensemble de pales de soufflante non carénées. On pourra par exemple se référer au document GB 2,129,502 qui décrit différents modes de réalisation d'un tel turbopropulseur.

Dans ce type de turbopropulseur, l'orientation des pales de soufflante de chaque ensemble (on parle également de réglage du pas) constitue l'un des paramètres permettant de gérer la poussée du turbopropulseur.

Différentes solutions ont été proposées pour commander l'orientation des pales de soufflante d'un même ensemble. On pourra se référer par exemple aux demandes de brevet français n° 09 53589 et 09 53591 déposées par la Demanderesse le 29 mai 2009. Dans ces demandes, il est prévu de coupler les pales pour le réglage de leur orientation à un anneau de synchronisation déplacé en rotation au moyen d'un vérin central et de bras de liaison.

Le document GB 2,218,747 décrit un dispositif de commande selon le préambule de la revendication 1.

### Objet et résumé de l'invention

La présente invention a pour but principal de proposer une solution pour la commande de l'orientation des pales de soufflante d'un turbopropulseur qui soit simple de mise en oeuvre tout en étant fiable et de faible masse.

Ce but est atteint grâce à un dispositif de commande de l'orientation des pales de soufflante d'un turbopropulseur comprenant au moins un ensemble de pales de soufflante à orientation réglable, l'ensemble étant solidaire en rotation d'un anneau rotatif lié mécaniquement à un rotor de turbine, caractérisé en ce que chaque pale de l'ensemble est couplée, pour le réglage de son orientation, à un support de pied de pale monté pivotant sur l'anneau rotatif au moyen d'un engrenage conique formé d'une première roue dentée solidaire du support de pied de pale et centrée sur un axe radial à l'anneau rotatif et d'une seconde roue dentée solidaire de l'anneau rotatif, centrée sur un axe tangentiel audit anneau rotatif, et portant un contrepoids excentré par rapport à son axe de rotation, le dispositif comprenant en outre un vérin centré sur l'axe de rotation de l'anneau rotatif, solidaire en rotation du rotor de turbine et dont la tige est reliée à chaque contrepoids par l'intermédiaire de bras de liaison de façon à déplacer angulairement de façon synchronisée l'ensemble des contrepoids autour de l'axe de rotation de leur roue dentée respective.

Un tel dispositif de commande présente de nombreux avantages. Notamment, il est fiable et léger car il possède relativement peu de pièces avec des liaisons mécaniques simples. En particulier, il n'y a pas de pièces intermédiaires de guidage en rotation ou en translation qui auraient été délicates à mettre en point et sujettes à des phénomènes d'usure. Par ailleurs, la maintenance d'un tel dispositif est particulièrement aisée puisque les contrepoids qui sont logés à l'extérieur de l'anneau rotatif et le vérin sont facilement accessibles.

Chaque bras de liaison comprend une biellette radiale ayant une extrémité reliée au contrepoids correspondant et l'autre extrémité reliée à une branche d'un guignol de renvoi d'angle dont l'autre branche est reliée à la tige du vérin.

Avantageusement, la biellette radiale de chaque bras de liaison traverse radialement un bras de carter du turbopropulseur.

Avantageusement encore, pour chaque support de pied de pale, le nombre de dents de la première roue dentée de l'engrenage conique est sensiblement deux fois supérieur au nombre de dents de la seconde roue dentée.

La position de mise en drapeau des pales peut correspondre à une position angulaire des contrepoids dirigés radialement vers l'extérieur de l'anneau rotatif. De même, la position à 0° des pales correspond à une position angulaire instable des contrepoids dirigés radialement vers l'intérieur de l'anneau rotatif.

Les bras de liaison peuvent être régulièrement répartis autour de l'axe de rotation de l'anneau rotatif. Enfin, l'ensemble peut comprendre dix pales de soufflante.

L'invention concerne également un turbopropulseur à double hélice, comportant une turbine à deux rotors contrarotatifs et deux ensembles de pales de soufflante à orientation réglable solidaires en rotation de deux anneaux rotatifs respectivement liés aux rotors, la commande de l'orientation des pales de soufflante d'au moins l'un des ensembles étant réalisée par un dispositif de commande tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe longitudinale d'un turbopropulseur à double hélice muni d'un dispositif de commande de l'orientation des hélices selon l'invention ;
- la figure 2 est une vue agrandie de la figure 1 montrant la commande de l'orientation des hélices des ensembles amont et aval ;
- les figures 3A et 3B sont des vues, respectivement en perspective et en coupe radiale, montrant la commande de l'orientation d'une pale de soufflante du turbopropulseur de la figure 1 à l'aide du dispositif selon l'invention ;
- les figures 4A et 4B montrent de façon schématique la cinématique du dispositif de commande selon l'invention ; et
- les figures 5A à 5D illustrent différents calages d'une pale en fonction de la position angulaire du contrepoids qui lui est associé.

### Description détaillée d'un mode de réalisation

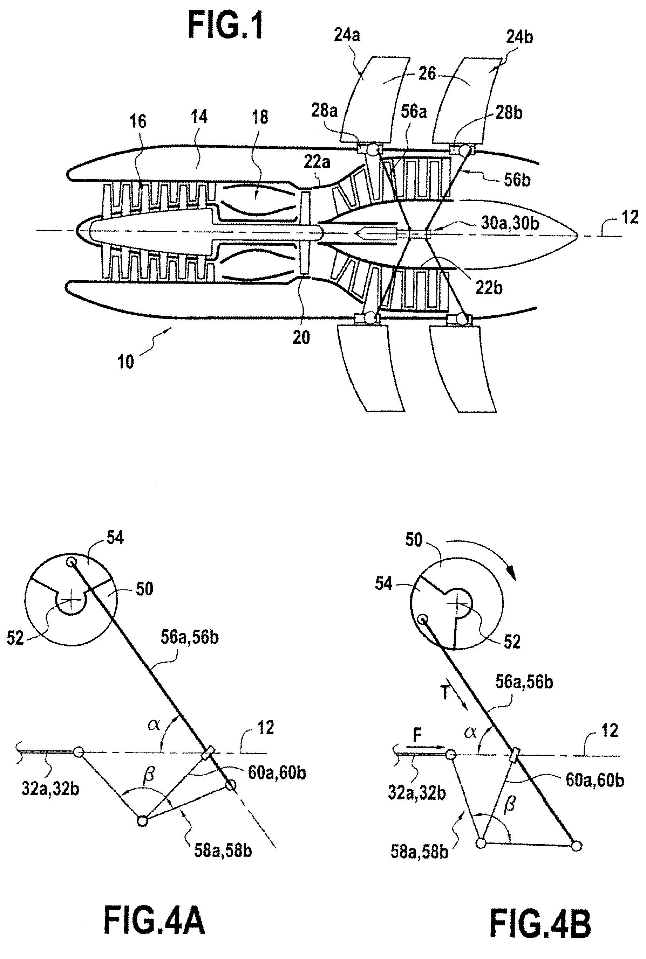

La figure 1 représente de façon très schématique un exemple de réalisation d'un turbopropulseur d'avion du type à double hélice.

Un tel turbopropulseur est connu et ne sera donc pas décrit en détails. Le turbopropulseur 10 comprend notamment un axe longitudinal 12 et une nacelle annulaire 14 disposée coaxialement autour de l'axe longitudinal. Le turbopropulseur 10 comprend en outre, d'amont en aval, un compresseur 16, une chambre de combustion 18 et une turbine 20 à deux rotors contrarotatifs 22a, 22b, ces différents éléments étant également disposés coaxialement autour de l'axe longitudinal 12 du turbopropulseur.

Le turbopropulseur 10 comprend encore un ensemble amont (ou avant) 24a et un ensemble aval (ou arrière) 24b de pales de soufflante 26 à orientation réglable. Les pales de soufflante 26 de chaque ensemble 24a, 24b sont plus précisément montées sur un anneau rotatif 28a, 28b en forme de plate-forme annulaire centrée sur l'axe longitudinal 12 du turbopropulseur.

Les pales de soufflante 26 de chaque ensemble sont par ailleurs régulièrement espacées circonférentiellement et s'étendent radialement depuis la surface de l'anneau rotatif respectif 28a, 28b (elles sont non carénées). Chaque rotor 22a, 22b de la turbine 20 porte et entraîne en rotation l'un des anneaux rotatifs 28a, 28b sur lequel est monté l'un des ensembles 24a, 24b de pales de soufflante à orientation réglable.

Le turbopropulseur comprend également un dispositif pour la commande de l'orientation des pales de soufflante de chaque ensemble 24a, 24b. Le dispositif de commande selon l'invention permet de régler l'orientation des pales de soufflante à la fois de l'ensemble amont 24a et de l'ensemble aval 24b. Il pourrait toutefois être utilisé pour la commande de l'orientation des pales d'un seul de ces ensembles.

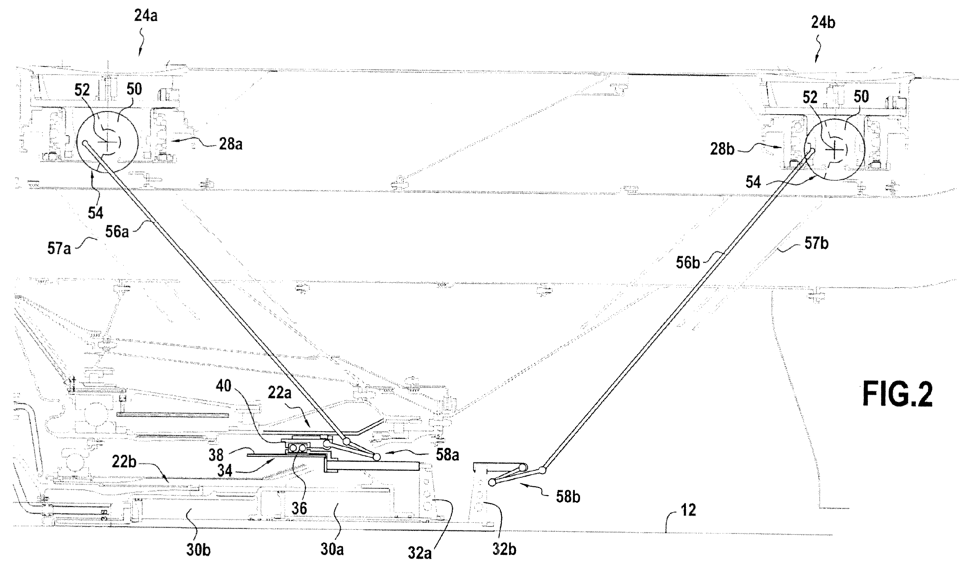

Comme représenté de façon plus précise sur la figure 2, le dispositif de commande selon l'invention comprend deux vérins 30a, 30b cylindriques actionnant des mécanismes de changement de l'orientation des pales de soufflante des ensembles amont et aval, ces mécanismes formés notamment à partir de biellettes étant décrits ultérieurement.

Les vérins 30a, 30b (de type hydraulique, pneumatique ou électrique) du dispositif de commande sont coaxiaux, centrés sur l'axe longitudinal 12 et solidaires en rotation d'un arbre de l'un des rotors 22a, 22b de la turbine 20 (dans l'exemple décrit ici, les vérins sont solidaires en rotation d'un arbre du rotor 22b entraînant en rotation l'ensemble aval 24b).

Les tiges 32a, 32b respectives de ces deux vérins translatent axialement le long de l'axe longitudinal 12, la tige 32a du vérin extérieur 30a ajustant l'orientation des pales de soufflante de l'ensemble amont 24a et la tige 32b du vérin intérieur 30b ajustant l'orientation des pales de soufflante de l'ensemble aval 24b.

Il est à noter que les deux vérins 30a, 30b étant solidaires du rotor 22b, ils tournent donc autour de l'axe longitudinal 12 dans le sens de rotation des pales de soufflante de l'ensemble aval 24b. Or, le mécanisme de changement de l'orientation des pales de soufflante de l'ensemble amont 24a auquel est lié le vérin 32a est entraîné en rotation en sens inverse. Aussi, un palier à roulement 34 (à billes ou à rouleaux coniques) est monté entre la tige 32a du vérin intérieur et le mécanisme de changement de l'orientation des pales de soufflante de cet ensemble amont afin de transmettre les efforts axiaux du vérin intérieur vers le mécanisme tout en laissant ces deux entités libres de tourner dans des sens opposés.

De façon plus précise, la bague interne 36 du palier à roulement 34 est montée sur un arbre du rotor 22b entraînant en rotation l'ensemble aval 24b par l'intermédiaire de cannelures 38 et est reliée à la tige 32a du vérin intérieur. Quant à la bague externe 40 du palier 34, elle est reliée au mécanisme de changement de l'orientation des pales de soufflante de l'ensemble amont. Ainsi, le palier à roulement 34 suit la rotation de l'arbre du rotor 22b par rapport à un arbre du rotor 22a entraînant en rotation l'ensemble amont 24a.

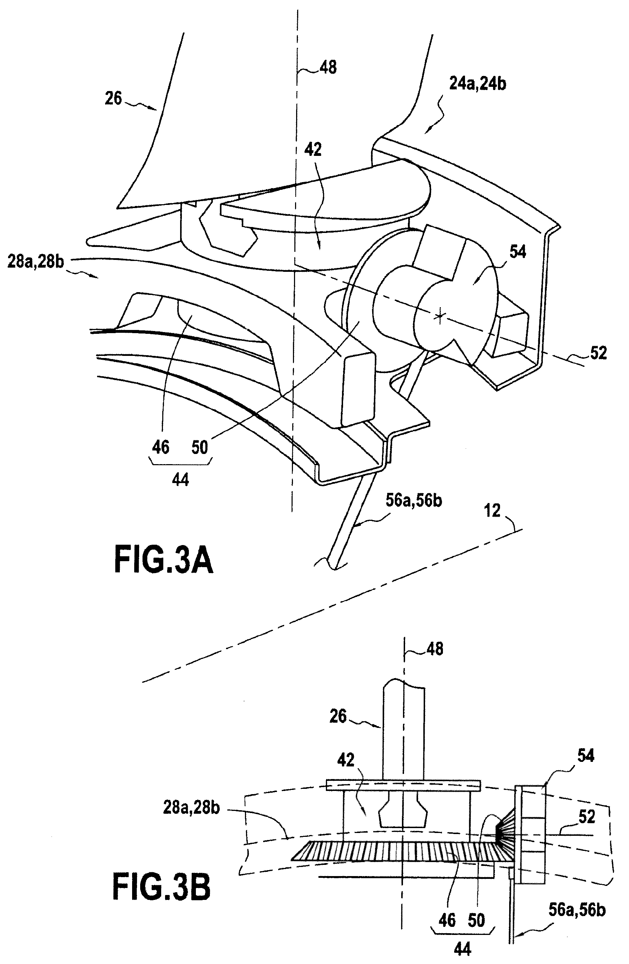

En liaison avec les figures 3A, 3B, 4A et 4B, on décrira maintenant les mécanismes de changement de l'orientation des pales de soufflante des ensembles amont et aval. Ces mécanismes sont identiques pour l'ensemble amont et l'ensemble aval.

Chaque pale 26 des ensembles 24a, 24b est couplée à un support de pied de pale 42 monté pivotant sur l'anneau rotatif 28a, 28b au moyen d'un engrenage conique 44. Comme représenté sur les figures 3A et 3B, cet engrenage conique est formé d'une première roue dentée 46, solidaire du support de pied de pale 42 et centrée sur un axe radial 48 à l'anneau rotatif, et d'une seconde roue dentée 50 solidaire de l'anneau rotatif et centrée sur un axe tangentiel 52 à cet anneau rotatif.

Le nombre de dents de la première roue dentée 46 d'un tel engrenage conique 44 est choisi de façon à être sensiblement deux fois supérieur au nombre de dents de la seconde roue dentée 50. Ainsi, une rotation de 90° de la seconde roue dentée entraînera une rotation de 45° environ de la première roue dentée.

Par ailleurs, la seconde roue dentée 50 de chaque engrenage conique porte une masselotte formant contrepoids 54, celui-ci étant excentré par rapport à l'axe de rotation 52 de la roue. La masse de ce contrepoids est prédéfinie en fonction notamment des caractéristiques des pales de soufflante.

Chaque mécanisme de changement de l'orientation des pales de soufflante comprend en outre une pluralité de bras de liaison qui relient la tige 32a, 32b du vérin 30a, 30b correspondant aux contrepoids 54 de l'ensemble correspondant de pales de soufflante.

Ces bras de liaison ont pour fonction de convertir le déplacement axial de la tige du vérin en une rotation synchronisée des contrepoids de l'ensemble correspondant de pales de soufflante autour de leur axe de rotation 52 respectif.

A cet effet, chaque bras de liaison comprend une biellette radiale 56a, 56b traversant un bras de carter 57a, 57b du turbopropulseur et ayant une extrémité reliée au contrepoids correspondant et l'autre extrémité reliée à une branche d'un guignol de renvoi d'angle 58a, 58b dont l'autre branche est reliée à la tige 32a, 32b du vérin correspondant. Chaque bras de liaison comprend également une biellette de guidage 60a, 60b dont une extrémité est reliée à la liaison entre les deux branches du guignol de renvoi d'angle et dont l'autre extrémité sert de support de guidage pour la biellette radiale 56a, 56b.

La cinématique de déplacement des bras de liaison est illustrée sur les figures 4A et 4B.

Sur la figure 4A, le contrepoids 54 de la seconde roue dentée 50 est pivoté vers le haut (c'est-à-dire vers l'extérieur de l'anneau rotatif sur lequel est monté le support de pied de pale correspondant). Comme décrit en détails ultérieurement, cette position du contrepoids correspond par exemple à une mise en drapeau de la pale associée.

Sur la figure 4B, le contrepoids a pivoté angulairement d'environ 3/4 de tour dans le sens horaire par rapport à la position de la figure 4A (pour mettre la pale associée en position d'inversion de poussée). Cette rotation est obtenue par actionnement du vérin qui entraîne un déplacement axial de la tige 32a, 32b du vérin dans le sens de la flèche F, ce déplacement provoquant un mouvement de traction T sur la biellette radiale 56a, 56b du bras de liaison.

Bien entendu, d'autres positions angulaires du contrepoids (et donc d'autres calages intermédiaires de la pale) peuvent être obtenues en déplaçant la tige 32a, 32b du vérin correspondant de manière adéquate.

Pour qu'une telle cinématique fonctionne correctement, il est nécessaire que les conditions géométriques suivantes soient respectées :
X = Y = Z (avec X et Y longueurs des branches du guignol de renvoi d'angle 58a, 58b et Z longueur de la biellette de guidage 60a, 60b) ; et
β = 2 x α (avec β angle formé entre les branches du guignol de renvoi d'angle et α angle formé entre la biellette radiale 56a, 56b et l'axe longitudinal 12 sur lequel est centrée la tige 32a, 32b correspondante du vérin).

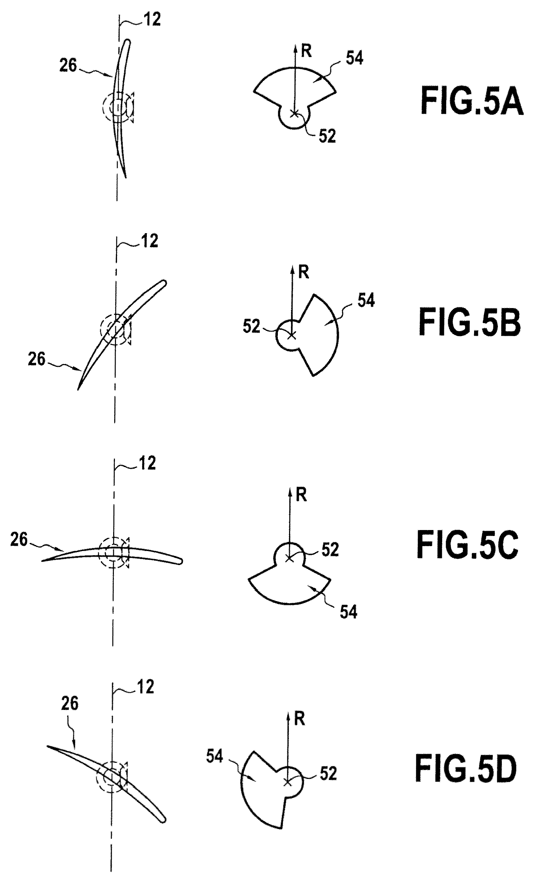

En liaison avec les figures 5A à 5D, on décrira maintenant les différentes configurations possibles du calage des pales de soufflante que permet d'obtenir le dispositif de commande selon l'invention.

La figure 5A représente une mise en drapeau de la pale 26 (également appelée mise en position d'incidence minimale), c'est-à-dire une position dans laquelle la pale est disposée (selon l'axe longitudinal 12) dans le sens d'avancement de l'avion pour minimiser la traînée. Cette position est une position de sureté.

La position de mise en drapeau de la pale 26 est de préférence associée à une position angulaire du contrepoids 54 correspondant tourné vers le haut, c'est-à-dire dirigée radialement vers l'extérieur de l'anneau rotatif sur lequel est monté le support de pied de pale (la direction radiale extérieure est schématisée par la flèche R sur les figures). Une telle configuration présente ainsi plusieurs avantages. En particulier, en cas de rupture d'une biellette radiale 56a, 56b, le contrepoids 54 va se positionner vers le haut (figure 5A) sous l'effet de la force centrifuge due à la rotation de l'anneau rotatif, résultant en une mise en drapeau de la pale correspondante. La sûreté du dispositif de commande selon l'invention est donc assurée en cas de défaillance. Par ailleurs, comme les contrepoids vont avoir tendance en fonctionnement à vouloir se positionner vers le haut, les biellettes radiales sont dimensionnées pour travailler en traction, et non en compression ni en torsion de sorte qu'elles peuvent être de diamètre réduit.

Sur la figure 5B, le contrepoids 54 est pivoté autour de son axe de rotation 52 d'un quart de tour dans le sens horaire par rapport à la figure 5A, ce qui correspond, compte tenu du rapport d'engrènement entre les roues dentées de l'engrenage conique, à un pivotement de 45° de la pale 26 par rapport à sa position de mise en drapeau. Ce pivotement du contrepoids est obtenu comme décrit précédemment en liaison avec les figures 4A et 4B. Un tel calage de la pale 26 correspond à une position de vol dans laquelle la pale est sortie pour créer de la poussée.

Sur la figure 5C, le contrepoids 54 est à nouveau pivoté d'un quart de tour dans le sens horaire par rapport à la figure 5B, ce qui correspond à un pivotement de 90° de la pale 26 par rapport à sa position de mise en drapeau (correspondant donc à une position angulaire du contrepoids dirigé radialement vers l'intérieur de l'anneau rotatif). Ce calage dit « position à 0° » de la pale 26 doit cependant être transitoire vers un passage en position d'inversion de poussée (cas de la figure 5D) car il existe un risque de survitesse si ce calage est maintenu de façon prolongée. Le contrepoids étant aligné avec la direction radiale R, il ne subit pas de couple et est donc à l'équilibre. Toutefois, cet équilibre est instable car le contrepoids cherche, sous l'effet de la force centrifuge, à tourner vers le haut, d'un côté ou de l'autre. La pale 26 a donc tendance à fuir la position à 0°, ce qui est un gage de sureté. Ainsi, cette position à 0° ne peut être que transitoire vers un passage en position d'inversion de poussée.

La figure 5D illustre donc la pale 26 en position d'inversion de poussée (également appelée position « reverse »). Avec un tel calage, la pale est orientée vers l'arrière pour créer une contre-poussée pour aider au freinage de l'avion. Pour obtenir un tel calage à partir d'une position de vol de la pale, il suffit que la biellette radiale tire suffisamment sur le contrepoids 54 pour ramener la pale vers la position à 0° de la figure 5C : par inertie, le contrepoids va continuer son mouvement pour passer de l'autre côté et amener ainsi la pale en positon reverse grâce à l'effet de la force centrifuge de rotation de l'anneau rotatif.

En complément, il pourrait être envisagé d'ajouter un actionneur électrique (de type moteur rotatif ou autre) qui aiderait le contrepoids à passer l'autre côté au cas où l'inertie du mécanisme ne serait pas suffisante, l'actionneur électrique pouvant alors être alimenté par le circuit de dégivrage des hélices.

Il est à noter que les figures représentent un exemple de configuration de turbopropulseur dans lequel l'ensemble de pales sur lequel est positionné le dispositif de commande selon l'invention comporte dix pales de soufflante 26 dont le calage est commandé par autant de bras de liaison régulièrement répartis autour de l'axe longitudinal 12 du turbopropulseur.

De plus, l'invention a été décrite ci-dessus en liaison avec un turbopropulseur ayant une turbine contrarotative liée directement aux hélices. Bien entendu, l'invention s'applique également aux turbopropulseurs à double hélice dont les hélices sont entraînées par un réducteur à engrenages planétaires.

## Revendications

1. Dispositif de commande de l'orientation des pales de soufflante d'un turbopropulseur comprenant au moins un ensemble (24a, 24b) de pales (26) de soufflante à orientation réglable, ledit ensemble étant solidaire en rotation d'un anneau rotatif (28a, 28b) lié mécaniquement à un rotor (22a, 22b) de turbine (20), chaque pale de l'ensemble étant couplée, pour le réglage de son orientation, à un support de pied de pale (42) monté pivotant sur l'anneau rotatif au moyen d'un engrenage conique (44) formé d'une première roue dentée (46) solidaire du support de pied de pale et centrée sur un axe radial (48) à l'anneau rotatif et d'une seconde roue dentée (50) solidaire de l'anneau rotatif, centrée sur un axe tangentiel (52) audit anneau rotatif, et portant un contrepoids (54) excentré par rapport à son axe de rotation, **caractérisé en ce que** le dispositif comprend en outre un vérin (30a, 30b) centré sur l'axe de rotation (12) de l'anneau rotatif, solidaire en rotation du rotor de turbine et dont la tige (32a, 32b) est reliée à chaque contrepoids (54) par l'intermédiaire de bras de liaison de façon à déplacer angulairement de façon synchronisée l'ensemble des contrepoids autour de l'axe de rotation de leur roue dentée respective, chaque bras de liaison comprenant une biellette radiale (56a, 56b) ayant une extrémité reliée au contrepoids correspondant et l'autre extrémité reliée à une branche d'un guignol de renvoi d'angle (58a, 58b) dont l'autre branche est reliée à la tige du vérin.

2. Dispositif selon la revendication 1, dans lequel la biellette radiale (56a, 56b) de chaque bras de liaison traverse radialement un bras de carter (57a, 57b) du turbopropulseur.

3. Dispositif selon l'une des revendications 1 et 2, dans lequel les bras de liaison sont régulièrement répartis autour de l'axe de rotation (12) de l'anneau rotatif.

4. Dispositif selon l'une quelconque des revendications 1 à 3, dans lequel, pour chaque support de pied de pale, le nombre de dents de la première roue dentée (46) de l'engrenage conique (44) est sensiblement deux fois supérieur au nombre de dents de la seconde roue dentée (50).

5. Dispositif selon l'une quelconque des revendications 1 à 4, dans lequel la position de mise en drapeau des pales correspond à une position angulaire des contrepoids dirigés radialement vers l'extérieur de l'anneau rotatif.

6. Dispositif selon l'une quelconque des revendications 1 à 5, dans lequel la position à 0° des pales correspond à une position angulaire instable des contrepoids dirigés radialement vers l'intérieur de l'anneau rotatif.

7. Dispositif selon l'une quelconque des revendications 1 à 6, dans lequel l'ensemble (24a, 24b) comprend dix pales (26) de soufflante.

8. Turbopropulseur à double hélice, comportant une turbine (20) à deux rotors (22a, 22b) contrarotatifs et deux ensembles (24a, 24b) de pales (26) de soufflante à orientation réglable solidaires en rotation de deux anneaux rotatifs (28a, 28b) respectivement liés aux rotors, la commande de l'orientation des pales de soufflante d'au moins l'un des ensembles étant réalisée par un dispositif selon l'une quelconque des revendications 1 à 7.

## Patentansprüche

1. Vorrichtung zur Steuerung der Ausrichtung der Gebläseschaufeln eines Turboprop-Triebwerks, umfassend wenigstens eine Anordnung (24a, 24b) von Gebläseschaufeln (26) mit einstellbarer Ausrichtung, wobei die Anordnung mit einem Drehring (28a, 28b), welcher mit einem Rotor (22a, 22b) einer Turbine (20) mechanisch verbunden ist, drehfest ist, wobei jede Schaufel der Anordnung für die Einstellung ihrer Ausrichtung mit einem Schaufelfußhalter (42) gekoppelt ist, der an dem Drehring mittels eines Kegelradgetriebes (44), welches von einem ersten Zahnrad (46), das mit dem Schaufelfußhalter fest verbunden und um eine zu dem Drehring radiale Achse (48) zentriert ist, und von einem zweiten Zahnrad (50), welches mit dem Drehring fest verbunden, um eine zu dem Drehring tangentiale Achse (52) zentriert ist und ein in Bezug auf seine Rotationsachse außermittig angeordnetes Gegengewicht (54) trägt, gebildet ist, drehbar angebracht ist, **dadurch gekennzeichnet, dass** die Vorrichtung ferner einen Zylinder (30a, 30b) umfasst, der um die Rotationsachse (12) des Drehrings zentriert ist, mit dem Turbinenrotor drehfest ist und dessen Stange (32a, 32b) mit jedem Gegengewicht (54) mittels Verbindungsarmen verbunden ist, um alle Gegengewichte um die Rotationsachse ihres jeweiligen Zahnrades auf synchrone Weise winkelmäßig zu bewegen, wobei jeder Verbindungsarm eine radiale Stange (56a, 56b) umfasst, deren eines Ende mit dem entsprechenden Gegengewicht verbunden ist und deren anderes Ende mit einem Schenkel eines Winkelhebels (58a, 58b) verbunden ist, dessen anderer Schenkel mit der Stange des Zylinders verbunden ist.

2. Vorrichtung nach Anspruch 1, bei der die radiale Stange (56a, 56b) eines jeden Verbindungsarms einen Gehäusearm (57a, 57b) des Turboprop-Triebwerks radial durchgreift.

3. Vorrichtung nach einem der Ansprüche 1 und 2, bei der die Verbindungsarme um die Rotationsachse (12) des Drehrings gleichmäßig verteilt sind.

4. Vorrichtung nach einem der Ansprüche 1 bis 3, bei der für jeden Schaufelfußhalter die Anzahl an Zähnen des ersten Zahnrades (46) des Kegelradgetriebes (44) im Wesentlichen zweimal größer als die Anzahl an Zähnen des zweiten Zahnrades (50) ist.

5. Vorrichtung nach einem der Ansprüche 1 bis 4, bei der die Position der Verstellung der Schaufeln in Richtung Fahne einer Winkelstellung der radial zur Außenseite des Drehrings gerichteten Gegengewichte entspricht.

6. Vorrichtung nach einem der Ansprüche 1 bis 5, bei der die 0°-Position der Schaufeln einer instabilen Winkelstellung der radial zur Innenseite des Drehrings gerichteten Gegengewichte entspricht.

7. Vorrichtung nach einem der Ansprüche 1 bis 6, bei der die Anordnung (24a, 24b) zehn Gebläseschaufeln (26) umfasst.

8. Turboprop-Triebwerk mit Doppelpropeller, umfassend eine Turbine (20) mit zwei gegenläufigen Rotoren (22a, 22b) und zwei Anordnungen (24a, 24b) von Gebläseschaufeln (26) mit einstellbarer Ausrichtung, die mit zwei Drehringen (28a, 28b), welche jeweils mit den Rotoren verbunden sind, drehfest sind, wobei die Steuerung der Ausrichtung der Gebläseschaufeln von wenigstens einer der Anordnungen durch eine Vorrichtung nach einem der Ansprüche 1 bis 7 realisiert ist.

## Claims

1. A control device for the orientation of the fan blades of a turboprop including at least one set (24a, 24b) of fan blades (26) having adjustable orientation, said set being attached in rotation to a rotating ring (28a, 28b) mechanically linked to a rotor (22a, 22b) of a turbine (20), **characterized in that** each blade of the set is coupled, for control of its orientation, to a blade root support (42) mounted pivotably on the rotating ring by means of a conical gear train (44) consisting of a first gear wheel (46) attached to the blade root support and centered on an axis (48) radial to the rotating ring and of a second gear wheel (50) attached to the rotating ring, centered on an axis (52) tangential to said rotating ring, and bearing a counterweight (54) that is eccentric with respect to its axis of rotation, the device also including a cylinder (30a, 30b) centered on the axis of rotation (12) of the rotating ring, attached in rotation to the turbine rotor and the rod (32a, 32b) whereof is connected to each counterweight (54) through connecting arms so as to impart synchronous angular motion to the set of counterweights about the axis of rotation of their respective gear wheel, each connecting arm having a radial link (56a, 56b) having one end connected to the corresponding counterweight and the other end connected to a arm of a bellcrank (58a, 58b) the other arm whereof is connected to the cylinder rod.

2. The device according to Claim 1, wherein the radial link (56a, 56b) of each connecting arm passes radially through a housing arm (57a, 57b) of the turboprop.

3. The device according to one of Claims 1 and 2, wherein the connecting arms are evenly distributed about the axis of rotation (12) of the rotating ring.

4. The device according to any one of Claims 1 through 3 wherein, for each blade root support, the number of teeth of the first gear wheel (46) of the conical gear train (44) is substantially twice the number of teeth of the second gear wheel (50).

5. The device according to any one of Claims 1 through 4, wherein the feathering position of the blades corresponds to an angular position of the counterweights that is directed outward from the rotating ring.

6. The device according to any one of Claims 1 through 5, wherein the 0° position of the blades corresponds to an unstable angular position of the counterweights directed radially inward from the rotating ring.

7. The device according to any one of Claims 1 through 6, wherein the set (24a, 24b) includes ten fan blades (26).

8. A dual propeller turboprop, comprising a turbine (20) having two counter-rotating rotors (22a, 22b) and two sets (24a, 24b) of fan blades (26) having adjustable orientation attached in rotation to two rotating rings (28a, 28b) respectively linked to the rotors, control of the orientation of the fan blades of at least one of the sets being accomplished by a device according to any one of Claims 1 through 7.
